# EUROPEAN PATENT SPECIFICATION

(11) **EP 3 336 813 B1**
(45) Date of publication and mention of the grant of the patent: **09.10.2024**
(21) Application number: 16835529.5
(22) Date of filing: 10.08.2016
(51) Int. Cl.: G08B 17/00, G08B 17/04

(54) **DEVICE FOR WARNING OF PRE-FIRE SITUATIONS ARISING AS A RESULT OF LOCAL OVERHEATING OF ELECTRICAL EQUIPMENT**
AUTONOME VORRICHTUNG ZUR WARNUNG VOR VORBRANDSITUATIONEN INFOLGE LOKALER ÜBERHITZUNG VON ELEKTRISCHEN AUSRÜSTUNGEN
DISPOSITIF D'ALERTE AUTONOME POUR DES SITUATIONS DE PRÉ-INCENDIE CRÉÉS EN CAS DE SURCHAUFFE LOCALE D'ÉQUIPEMENTS ÉLECTRIQUES

(30) Priority: 10.08.2015 RU 2015133302
(43) Date of publication of application: 20.06.2018
(73) Proprietor: Limited Liability Company "Termoelektrica", Moscow 143026 (RU)
(72) Inventor: LESIV, Aleksey Valeryevich, Dolgoprudny 141707 (RU)
(74) Representative: Chimini, Francesco
(86) International application number: PCT/RU2016/000528
(87) International publication number: WO 2017/026919

(56) References cited:
- JP-A- 2007 160 028
- JP-A- H0 666 646
- JP-A- H0 666 648
- RU-C1- 2 041 920
- US-A1- 2004 049 983
- US-A1- 2008 188 590

## Description

### Technical field

The claimed device refers to the means of control for pre-fire situations arising as a result of local overheating of electrical equipment and can be used to identify electrical equipment malfunction in the early stages and prevention of fire caused by malfunction of the wiring.

### Background of the invention

To date, more than 20% of all fires occur due to violations in the operation of the electrical equipment and electrical devices. Most often, ignition occurs in the area of electrical contacts.

As a rule, a fire does not occur spontaneously. It is usually preceded by a prolonged breakdown of the wire at the junction points. At the same time the current intensity does not increase dramatically, as in the case of a short circuit, therefore, electromagnetic releases used in modem circuit breakers can not be used for protection in such situations.

So, with poor contact in sockets or switchboards there is an increased resistance, and, consequently, a source of increased temperature. The wire is deformed by the action of thermal expansion, and multiple cycles of heating and cooling make its deformation critical. In the place of constricton the wire becomes thinner, its oxidation occurs. As a consequence the resistance at the junction point keeps on increasing, and as a result, heating increases even more. Ultimately, this can lead to a fire.

To avoid such situations, it is advisable to have a simple method that allows detecting such a defect at an early stage, since eliminating the cause of overheating is much less resource-intensive and labor-consuming than eliminating the consequences of a fire.

The background of the invention knows various pre-fire situations alarms representing functional analogues of the material of the present invention.

There is a method for diagnosing a pre-fire situation and prevention of a fire, including measuring the intensity of a monochromatic radiation emitted by a pulsed source at the frequency of its absorption by the products of thermal destruction of the identified materials, and generation of a control signal for fire alarm when the concentrations of their admissible values are exceeded [1].

The disadvantages of the known method include its low reliability, high probability of false responses, as well as insufficiently early detection of fires, which is caused by the development of a control signal without taking into account the rate of increase in concentration and the assessment of a fire hazard situation with respect to the concentrations of insufficient quantities of controlled gas components.

A method and a device for detecting a pre-fire situation based on the infrared spectroscopy is known. The device comprises an optically coupled source and a radiation receiver coupled to the first amplifier and a processing pattern that includes two radiation receivers, the second and the third amplifier which, together with the first amplifier, are connected to an analog-to-digital converter through the respective blocks of admissible concentrations of fire hazardous components, the output of the converter is connected through the microprocessor and digital-to-analog converter to the alarm unit, while the second output of the microprocessor is connected to the monitor. It is designed to detect the products of thermal decomposition of various organic materials formed under the influence of a non-standard heat source, which can arise, in particular, as a result of sparking or short-circuiting in the electrical commutation equipment. [2].

The disadvantage of the known technical solution is that it reacts to the appearance of gases and smoke accompanying the already started ignition, i.e. it gives a signal after the start of the fire.

A device is known which is being a junction box containing a temperature change sensor connected to the microprocessor control unit [3].

The disadvantage of this device is its relatively high cost, as well as the fact that it does not provide continuous monitoring of any point of the electrical network or electrical unit.

Another known method for diagnosing a pre-fire situation and prevention of a fire, including measuring of informative parameters by a sensor unit: concentrations of gaseous thermo destruction products in air, namely CO, CO₂, NOₓ HCl, oxidants, fume, as well as temperature, measurement of the signal lag time from each of the sensors using an ignition simulator, determining the derivatives values of the time dependence on the information parameters measured by each sensor , the generation of a control signal for fire alarm start and the possible activation of fire extinguishing means and switching off the power supply as a result of a fire risk analysis based on measured by, at least, two sensors of informative parameters, characterized by the fact that in addition as informative parameters, measure concentrations of H₂, CH₄, NH₃, O₂, Cl₂, H₂S, SO₂, HCOOH, C₆H₅OH, reducing agents in the time interval 0.1 - 60 s they determine for each dependence of information parameters on time, at least one value of the derivative, determine the modified value of each of the measured informative parameters as a value equal to the product of the derivative value per time corresponding to each lag sensor and produce the control signal when the permissible values are exceeded by the modified values of the informative parameters determined from the measurements of at least two sensors, the time delay of the signal being periodically measured as the value of the time interval between the switching times of the fire simulator and the maximum value of the signal from the sensor [4].

The known method is applicable in wide use to a limited extent because of the complexity of measuring the concentrations of gaseous thermodestruction products in air, the inertia of the measurements and the need for expensive equipment.

As an alternative method for diagnosing the pre-fire situation, it is proposed to apply a special formulation to the current-conducting part, which, when heated above a certain temperature, emits an odorant - a substance having a specific, warning odor.

Odorants are currently used to give a warning odor to a natural gas and liquefied gases used for industrial purposes. They can detect leaks in gas utility lines and equipment, as well as the presence of gases in industrial and residential premises long before they are accumulated in explosive or toxic concentrations. As odorants, sulfur-containing compounds are usually used: mercaptans (methyl mercaptan, ethyl mercaptan, propyl mercaptan, isopropyl mercaptan, etc.) and sulphides (dimethyl sulfide, diethyl sulfide, dimethyl disulphide, etc.). A more intense and stable odor compared to individual components is a mixture of several odorants.

Since odorants have a very strong smell, they shall be stored hermetically-sealed and released strictly at the time of the wiring overheating. As a system that releases odorants upon heating, a device made of a crosslinked polymeric composite material having an explosive destruction temperature in the range of 80-200 ° C, including odorants as fillers, can be used.

Structural analogues of the invention device are the fire extinguishing means based on composite materials containing fire extinguishing agents.

There is a device with fire-extinguishing properties, made in the form of a plate fixed to a solid phase carrier, which is a microencapsulated fire extinguishing composition in the form of a halocarbon encapsulated in a polymeric shell and distributed in a polymer binder [5].

It is a known autonomous fire extinguishing means made of the material with fire-extinguishing properties, containing microcapsules with an extinguishing composition and a binder. Microcapsules with an extinguishing composition are halocarbon encapsulated in a polymeric shell of polyurea and / or polyurethane based on a polyisocyanate prepolymer with the dimensions from 2 to 100 µm. The binder is a composite material comprising a polymer component and mineral fibers and / or particles [6].

The closest structural analogue is the pyro-sticker, which is a means of extinguishing, designed specifically for protection against fires in small objects such as: switchboards, electrical cabinets, safes. Under the influence of high temperature, the product releases the extinguishing agent contained inside the microcapsules, which quickly stops the burning [7].

Thus, all the described fire extinguishing means are designed to eliminate the fire that has already arisen, and not to prevent it, which is the most effective way to fight fire.

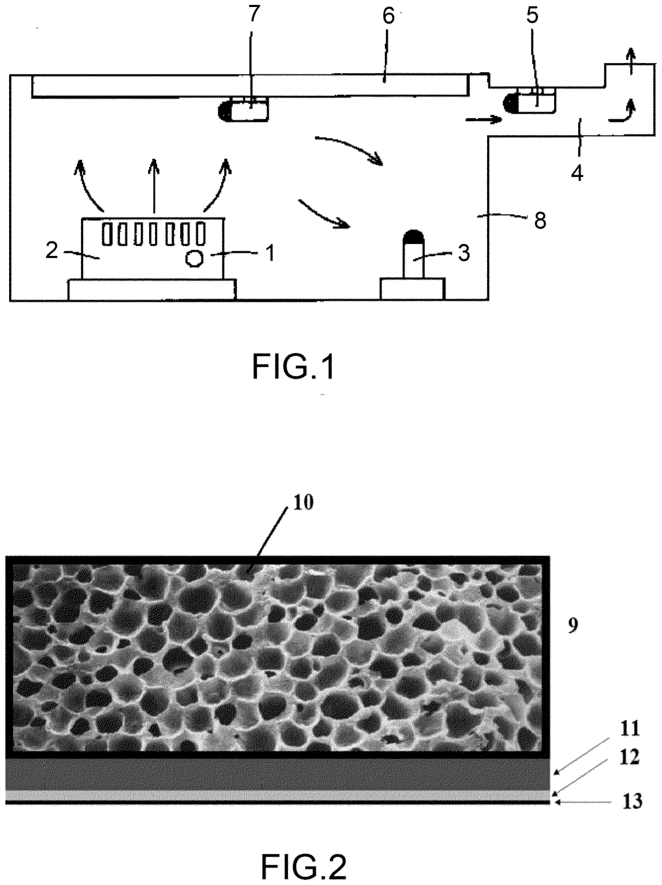

The closest analogue of the present invention is a device used in a method for early detection of overheating in hard-to-reach places of the electrical and mechanical equipment disclosed in the Patent Document [8], which (method) is based on the use of an odorant **1** encapsulated in a hot-melt composition, installed near the heat generating part of the device **2** , for which the overheating control is performed (see Fig. 1). An odor sensor **3** is installed downstream from the gas flow from this odorant (see Fig. 1). As an odorant, microcapsules of a hot melt composition containing flavoring agents can be used. Also, flavors mixed with the wax or other fatty acids can be applied. This technical solution is the closest analogue of the present invention.

The disadvantage of the specified technical solution is the use of hot melt polymers. The release of gas from hot melt polymers begins when the material melts. It can have undesirable consequences for the electrical equipment, such as foaming, spraying of the polymer mass with the evolved gas. Insertion of hot foamed mass, polymer droplets or polymer melt flowing off the sticker to the adjacent contacts, electrical equipment, blowers, sensors, can lead to malfunction or even ignition. In addition, for the registration of pre-fire situations one of the most significant criteria is the response speed of the system as a whole. For these purposes, the gas shall be released in a significant amount when the critical temperature is reached and quickly distributed in volume. This is possible only in the case of opening the material with a large excess pressure of gas inside the capsule (pores). In this case, the gas almost instantly leaves the material, is not occluded on it and reaches the sensor in the minimum time. At the same time, pore opening resulting from the melting of the polymer may be accompanied by the transition of the odorant to a hot melt composition (eg, dissolution) or can create a foam layer. In this case, the evaporation of gas from the surface will proceed more slowly and will not lead to a one-time transition of the main amount of gas enclosed in the product into the gas phase.

Moreover, a significant disadvantage of the system is the rate of gas emission during slow heating of the microencapsulated odorant or the odorant mixed with wax or fatty acids. Since the first the layer of material to be melted is the one closest to the source of heat, then the next, and so on, the exit velocity of the odorous substance will be negligible. If there is ventilation, the concentration of the odorous substance may be negligible, so that the sensor will not react.

The document US 2008 188590 describes an intumescent fire retardant that comprises ploymers cross-linked with sulfur.

### Character of the invention

The technical goal of the model invention is creation of an autonomous means of early pre-fire situations alarm for the fires that arise as a result of local overheating of electrical equipment, when the heating of wires or electrical contacts exceeds the permissible operating parameters (> 100 ° C), but does not yet reach the level at which the thermal destruction of materials occurs, capable of ignition (> 250 ° C).

The technical result of the claimed solution is to increase the probability of detecting a pre-fire situation at an early stage.

The offered device is made of a polymeric thermosetting composite material with an explosive destruction temperature in the range of 80-200 ° C, the continuous phase of which is formed by a thermosetting polymer containing an odorant that is sulfur dioxide, low-molecular-weight mercaptans, dialkyl sulfides, dialkyl disulphides or mixtures thereof.

A distinctive feature of the polymeric composite material is the use of thermosetting polymers as polymeric materials. Using cross-linked connections eliminates a number of disadvantages inherent in the prototype. Thermosetting polymers lose their integrity when heated, but they do not pass into a thermoplastic state, which excludes foaming of the material, detachment from the substrate, or flowing to current-conducting parts.

In addition, the opening of the proposed composite material based on a thermosetting polymer is not due to melting of the shell, but due to its rupture by high pressure of the superheated light-boiling substance. Since the destruction of the shell is explosive, the gas yield is significant regardless of the rate of heating. Thus, unlike the prototype, the proposed material makes it possible to record overheating of electrical equipment, even at ventilated objects and in large electric boards.

Odorants used in the device of the present invention include, but are not limited to, sulfur dioxide, methyl mercaptan, ethyl mercaptan, n-propyl mercaptan, isopropyl mercaptan, n-butyl mercaptan, sec-butyl mercaptan, isobutyl mercaptan, tert-butyl mercaptan, amyl mercaptan, isoamyl mercaptan, hexyl mercaptan , dimethyl sulfide, diethyl sulfide, diallyldisulfide, allyl methyl sulfide, methylethylsulfide, diisopropyl sulfide, dimethyl disulphide, diethyl disulfide, dipropyl disulfide, diisopropyl disulfide, or mixtures thereof.

In some embodiments, the odorants are used in a mixture with solvents. The use of solvents allows achieving lower temperatures and narrower temperature ranges of the opening of the composite material while maintaining its mechanical characteristics.

Odorant solvents include, but are not limited to, hydrofluorochlorocarbons, hydrofluorocarbons, fluorocarbons, chlorocarbons, chlorofluorocarbons, perfluoro (ethylisopropyl ketone), alkanes, ethers, or mixtures thereof.

The advantage of using fluorinated compounds as solvents is the possibility of using a gas sensor. Fluorinated compounds are not present in indoor air under normal circumstances, so they can be detected at minimal concentrations, without fear of false responses. In addition, fluoroalkanes can be selectively detected by special sensors at the lowest concentrations down to 0.001 ppm [9], which makes the system reliable even when using forced ventilation or protection of electrical equipment in large volumes.

In a not claimed example, the polymeric composite material is a microcapsule with a core of a light-boiling substance bound in a binder. Microcapsules have a two-layer polymeric shell, the inner layer of which consists of gelatin or its derivative, and the outer reinforcing layer is made of carbamide resins, resorcinol resins, melamine resins, phenolic resins or polyvinyl acetate resins. The average outer diameter of the microcapsules is 1-5000 µm, the average thickness of the polymer shell is 0.01-1 µm. The polymeric binder is an acrylic resin and / or epoxy resin and / or polyamide and / or polyvinyl acetate and / or polyester and / or polyurea and / or polyvinyl alcohol and / or polyurethane.

IN another not claimed example, the polymeric composite material is a polymer gel formed by crosslinked polymer particles swollen in a solution of a light boiling substance placed in a polymer matrix. The crosslinked polymer is a polyacrylamide crosslinked with N, N'-methylenebisacrylamide, polyvinyl alcohol crosslinked with epichlorohydrin or polyvinyl alcohol crosslinked with glutaric aldehyde. The average particle size of the crosslinked polymer is 50-500 µm. The polymer matrix is polyorganosiloxanes, polyvinyl acetate, epoxy resins.

In other not claimed examples, the polymeric composite material is a silica gel or zeolite particles with an odorant occluded thereon, placed in a polymer matrix. The average particle size is preferably 10-2000 µm. The polymer matrix included in the composite material includes, but is not limited to, polyurethane, polyurea.

According to the invention, the polymeric composite material is porous polymer particles with closed-type pores or channels filled with an odorant or odorant solution placed in a polymer matrix. The average particle size is preferably 200-5000 µm. The average pore diameter is preferably 10-100 µm. As a porous polymer, polystyrene, polyorganosiloxanes, polyurethane, polyurea are offered. The polymer matrix included in the composite material includes, but is not limited to, polyvinyl acetate, epoxy resins.

Fig. 2 shows a general view of the device, made in the form of a plate made of composite material, mounted on current-carrying parts.

The device for pre-fire situation alarm consists of the plate **9** made of a polymeric composite material containing inside the cavities **10** an odorant that is adhered to the base **11** having an adhesive layer **12** on its back side by means of which the plate **9** is fixed to the current-carrying parts. Prior to installation on the wiring product, the adhesive layer **12** is closed with an easily detachable protective film **13.** When heated above a certain temperature, the odorant is released into the environment, where it is detected organoleptically.

When a certain temperature is reached, the filler boils up, which leads to the opening of the composite material and the release of gaseous products into the atmosphere, where their presence can be detected by smelling and will be a signal of the electrical equipment malfunction. The change in the composition of the filler and the polymer matrix makes it possible to vary the temperature of the opening of the material.

The opening of the proposed composite material based on a thermosetting polymer is not due to melting of the shell, but due to its rupture by high pressure of the superheated light-boiling substance. Since the destruction of the shell is explosive, the gas yield is significant regardless of the rate of heating. Thus, unlike the prototype, the proposed material makes it possible to record overheating of electrical equipment, even on ventilated objects.

Since the gaseous substances released by heating of the composite material are not present under normal conditions in the atmosphere, and also because they are released at relatively low temperatures (before the thermal decomposition of the materials from which wires and wiring devices are made), the invention allows to detect potentially fire hazardous situations long before the appearance of smoke or open fire.

Thus, the offered device makes it possible to detect pre-fire situations much earlier than existing analogues. The device is designed for multiple responses, since for the detection of overheating the emission of only a small fraction enclosed in the composite material of a light-boiling substance is enough. Due to the direct contact of the polymeric composite material with the heating section of the electrical circuit and the explosive nature of the material opening, a high response speed of the device is ensured.

In some embodiments, the device may be made in the form of a plate. The plate is fixed on the basis on the back of which the adhesive layer is applied, or it can be attached to the surface to be protected by double-sided adhesive tape.

In other embodiments of the invention, the device can be made in the form of a thread, which is fixed within the heat-shrinkable pipe by means of adhesive.

In other embodiments of the invention, the device can be made in the form of a clip that is fixed to the surface to be protected by the mechanical pressure of the clamps.

In other embodiments of the invention, the device can be made in the form of a piece of an adhesive tape with a heat-activated material (a patch version) applied to the center. In this case, thermal activation is understood as the property of explosive opening of a material when heated to a certain temperature.

In other embodiments of the invention, the device can be made in the form of a tape made of woven or non-woven material impregnated with a thermoactivated composition.

In other embodiments, the device can be made in the form of a gel or lacquer applied to current-carrying parts.

Moreover, in addition to the above listed forms, the device can have any other form that is most convenient for protecting a particular object.

The invention makes it possible to obtain a very cheap and effective device for early pre-fire situations alarm associated with local overheating of the electrical equipment, which is characterized by storage stability, reliability and is easy to use.

### Information sources:

1. Author's certificate of the USSR 1277159, IPC G08B17 / 10, 1985.
2. Patent of the Russian Federation No. 2022250, IPC G01N21 / 61, 1994.
3. Patent of the USA No. 5,654,684, IPC G08B25 / 08, G08B25 / 10, 1997
4. Patent of the Russian Federation 2,175,779, IPC G08B17 / 117, 2001.
5. Patent of the Russian Federation 90994, IPC A62D1 / 08, 2009.
6. Patent of the Russian Federation 109668, IPC A62D1 / 08, 2011
7. http://www.pirohimika.ru/index.php/produkty
8. Patent Document JP 6-66648, 1994
9. 7. A.P.Dolin, A.I. Karapuzikov, Yu.A. Kovalkova, "Efficiency of using a laser leak detector "KARAT" to determine the location and level of development of electrical equipment malfunction", Electro, Nº 6. PP. 25-28 (2009).

## Claims

1. An autonomous device for early pre-fire alarm in fire situations arising from local overheating of electrical equipment, the device made of a polymeric composite material containing a continuous phase formed by a thermosetting polymer with closed type pores and a sulfur containing odorant contained in the pores, the composite material being configured for mounting directly on an electrical circuit of the electrical equipment and configured to release the odorant into the environment when heated above a destruction temperature of the composite material, the composite material having destruction temperature in the range of 80-200 °C, where it is configured to explosively open due to the rupture of the continuous phase by high pressure of the superheated sulfur containing odorant, the device being designed for multiple responses to overheating.

2. The device for pre-fire situations alarm according to claims 1, wherein the odorant is sulfur dioxide, methyl mercaptan, ethyl mercaptan, n-propyl mercaptan, isopropyl mercaptan, n-butyl mercaptan, sec-butyl mercaptan, isobutyl mercaptan, tert-butyl mercaptan, amyl mercaptan, isoamyl mercaptan, hexyl mercaptan , dimethyl sulfide, diethyl sulfide, diallyldisulfide, allyl methyl sulfide, methylethylsulfide, diisopropyl sulfide, dimethyl disulphide, diethyl disulfide, dipropyl disulfide, diisopropyl disulfide, or any mixture thereof.

3. The device for pre-fire situations alarm according to claims 1, wherein the odorant additionally comprises a solvent selected from the group consisting of hydrofluorochlorocarbons, hydrofluorocarbons, fluorocarbons, chlorocarbons, chlorofluorocarbons, perfluoro (ethylisopropyl ketone), alkanes, ethers and mixtures thereof.

4. The device for pre-fire situations alarm according to claims 1, wherein the device is made in the form of a gel or varnish, applied to conductive parts.

## Patentansprüche

1. Autonome Vorrichtung zur Brandfrühwarnung in Brandsituationen durch lokale Überhitzung elektrischer Geräte, wobei die Vorrichtung aus einem polymeren Verbundmaterial hergestellt ist, das eine kontinuierliche Phase, die durch ein wärmehärtendes Polymer mit geschlossenen Poren gebildet wird, und einen in den Poren enthaltenen schwefelhaltigen Geruchsstoff enthält, wobei das Verbundmaterial zur direkten Montage an einem elektrischen Schaltkreis des elektrischen Geräts konfiguriert ist und derart konfiguriert ist, dass es den Geruchsstoff an die Umgebung abgibt, wenn es über eine Zerstörungstemperatur des Verbundmaterials erhitzt wird, wobei das Verbundmaterial eine Zerstörungstemperatur im Bereich von 80 - 200°C hat, wobei es derart konfiguriert ist, dass es sich aufgrund des Bruchs der kontinuierlichen Phase durch den hohen Druck des überhitzten schwefelhaltigen Geruchsstoffs explosionsartig öffnet, wobei die Vorrichtung für mehrere Reaktionen auf Überhitzung ausgelegt ist.

2. Vorrichtung zur Brandvorwarnung nach Anspruch 1, wobei der Geruchsstoff Schwefeldioxid, Methylmercaptan, Ethylmercaptan, n-Propylmercaptan, Isopropylmercaptan, n-Butylmercaptan, sec-Butylmercaptan, Isobutylmercaptan, tert-Butylmercaptan, Amylmercaptan, Isoamylmercaptan, Hexylmercaptan, Dimethylsulfid, Diethylsulfid, Diallyldisulfid, Allylmethylsulfid, Methylethylsulfid, Diisopropylsulfid, Dimethyldisulfid, Diethyldisulfid, Dipropyldisulfid, Diisopropyldisulfid oder eine Mischung davon ist.

3. Vorrichtung zur Brandvorwarnung nach Anspruch 1, wobei der Geruchsstoff zusätzlich ein Lösungsmittel enthält, das aus der Gruppe ausgewählt ist, die aus Fluorkohlenwasserstoffen, Fluorkohlenwasserstoffen, Fluorcarbonen, Chlorkohlenwasserstoffen, Fluorchlorkohlenwasserstoffen, Perfluor(ethylisopropylketon), Alkanen, Ethem und Mischungen davon besteht.

4. Vorrichtung zur Brandvorwarnung nach Anspruch 1, wobei die Vorrichtung in Form eines Gels oder Lacks hergestellt ist, der auf leitende Teile aufgetragen wird.

## Revendications

1. Dispositif autonome d'alarme précoce de pré-incendie en cas d'incendie par surchauffe locale d'un équipement électrique, ledit dispositif étant constitué d'un matériau composite polymère contenant une phase continue formée par un polymère thermodurcissable aux pores fermés et d'une substance odorante soufrée contenue dans les pores, le matériau composite étant configuré pour être monté directement sur un circuit électrique de l'équipement électrique et configuré pour libérer la substance odorante dans l'environnement lorsqu'il est chauffé à une température supérieure à sa température de destruction, le matériau composite ayant une température de destruction comprise dans l'intervalle de 80-200°C, où il est configuré pour s'ouvrir de manière explosive en raison de la rupture de la phase continue sous l'effet de la haute pression de la substance odorante soufrée surchauffée, le dispositif étant conçu pour des réponses multiples à la surchauffe.

2. Dispositif d'alarme pour des situations de pré-incendie selon la revendication 1, dans lequel la substance odorante est le dioxyde de soufre, le méthylmercaptan, l'éthylmercaptan, le n-propylmercaptan, l'isopropylmercaptan, le n-butylmercaptan, le sec-butylmercaptan, l'isobutylmercaptan, le tert-butylmercaptan, l'amylmercaptan, l'isoamylmercaptan, l'hexylmercaptan, le sulfure de diméthyle, le sulfure de diéthyle, le disulfure de diallyle, le sulfure d'allylméthyle, le sulfure de méthyléthyle, le sulfure de diisopropyle, le disulfure de diméthyle, le disulfure de diéthyle, le disulfure de dipropyle, le disulfure de diisopropyle, ou un mélange quelconque de ceux-ci.

3. Dispositif d'alarme pour des situations de pré-incendie selon la revendication 1, dans lequel la substance odorante comprend en outre un solvant choisi dans le groupe constitué par les hydrofluorochlorocarbures, les hydrofluorocarbures, les fluorocarbures, les chlorocarbures, les chlorofluorocarbures, la perfluoro(éthylisopropylcétone), les alcanes, les éthers et leurs mélanges.

4. Dispositif d'alarme pour des situations de pré-incendie selon la revendication 1, où le dispositif se présente sous la forme d'un gel ou d'un vernis, appliqué sur les parties conductrices.
